# FASCICULE DE BREVET EUROPEEN

(11) **EP 0 736 173 B1**
(45) Date de publication et mention de la délivrance du brevet: **15.04.1998**
(21) Numéro de dépôt: 95904587.3
(22) Date de dépôt: 22.12.1994
(51) Int. Cl.: G01N 27/82

(54) **PROCEDE ET DISPOSITIF DE CONTROLE MAGNETIQUE DE PRODUITS METALLIQUES**
VERFAHREN UND VORRICHTUNG ZUR MAGNETISCHEN KONTROLLE METALLISCHER PRODUKTE
METHOD AND DEVICE FOR MAGNETIC TESTING OF METAL PRODUCTS

(30) Priorité: 24.12.1993 FR 9315783
(43) Date de publication de la demande: 09.10.1996
(73) Titulaire: IXTREM (SOCIETE ANONYME), F-71000 Chalon-sur-Saône (FR); UNIMETAL, 57120 Rombas (FR)
(72) Inventeur: CRESCENZO, Eric, F-71590 Gergy (FR)
(74) Mandataire: Ventavoli, Roger
(86) Numéro de dépôt international: FR9401512
(87) Numéro de publication internationale: WO9518371

(56) Documents cités:
- FR-A- 2 229 970
- US-A- 3 443 211
- US-A- 3 609 530
- US-A- 3 670 239
- US-A- 3 739 261
- US-A- 3 829 762

## Description

L'invention concerne le contrôle magnétique de produits métalliques, plus particulièrement de produits en cours de façonnage, tels que des demi-produits sidérurgiques, obtenus après une première transformation (de laminage par exemple), ou même bruts de coulée continue.

Le contrôle concerné par l'invention vise notamment la détection de défauts de surface ou sous-cutanés, tels que des fissures, inclusions non métalliques, criques externes ou internes, piqûres, etc.

Ce type de contrôle entre dans la catégorie des contrôles non destructifs, pour lesquels on connaît déjà les contrôles par mesure du "flux de fuite" et les contrôles dits "par Courants de Foucault".

Les contrôles par "Courants de Foucault" consistent à générer dans le produit à contrôler des Courants de Foucault, qui génèrent à leur tour un champ magnétique réactif variable, lequel influe sur l'impédance d'une bobine réceptrice placée à proximité de la surface du produit. En présence d'un défaut dans le produit contrôlé, la circulation des Courants de Foucault est perturbée par ce défaut, ce qui provoque des variations du champ réactif et donc de l'impédance de la bobine réceptrice. La mesure de l'impédance permet donc de détecter la présence de défauts dans le produit.

Les contrôles par mesure du flux de fuite consistent à générer dans le produit un champ magnétique et à mesurer directement l'intensité du champ, à l'extérieur du produit et à proximité de sa surface. Classiquement, ce type de contrôle est utilisé sur des matériaux ferromagnétiques. Les lignes de force du champ s'établissent dans le produit magnétisé selon une direction générale parallèle à sa surface. En présence d'un défaut créant une discontinuité ponctuelle de la perméabilité magnétique, ces lignes de champ sont déviées et tendent à sortir du produit, et peuvent ainsi être détectées par mesure du champ local au droit du défaut. Selon la méthode de mesure du flux de fuite, il est nécessaire de travailler près de la saturation magnétique, c'est-à-dire que le champ généré dans le produit est proche du maximum autorisé par la perméabilité magnétique globale du matériau dont est constitué le produit, de manière à amplifier au maximum les perturbations créées par la présence de défauts, pour les rendre plus facilement détectables.

Il est à noter que, pour la méthode du flux de fuite, le champ généré dans le produit peut être constant ou variable, par exemple alternatif à fréquence réglable ou pulsé, alors que pour la détection de défauts par Courants de Foucault, le champ excitateur est nécessairement variable pour pouvoir générer des courants induits dans le produit.

Par les documents USP 3,739,261, USP 3,609,530 ou USP 3,443,211 notamment, on connaît des procédés de contrôle du genre précité qui utilisent comme détecteur une sonde à effet Hall.

Un problème qui se pose dans l'utilisation de capteurs à effet Hall est leur manque de sensibilité, qui implique, pour avoir une fiabilité acceptable de la détection des défauts, de générer des champs magnétiques intenses pour que les perturbations de ces champs par la présence de défauts soient elles-mêmes suffisamment prononcées pour être détectées.

Un autre problème provient du fait que le signal de défaut fourni par les capteurs à effet Hall est un signal en tension. De ce fait, l'électronique de traitement doit être adaptée au traitement de tels signaux et, dans le cas de l'utilisation combinée de capteurs de champ avec des capteurs à bobines à Courants de Foucault, elle doit donc s'ajouter à l'électronique de traitement des signaux issus des bobines à Courants de Foucault, lesquels consistent en des variations d'impédance, ce qui complique la réalisation de l'appareillage de traitement des signaux. Il faut noter à ce sujet que la combinaison de différentes méthodes de contrôle peut se révéler particulièrement intéressante pour la détection de défauts, car on peut ainsi obtenir plus d'informations sur les défauts détectés et ainsi mieux les caractériser.

Pour résoudre ces inconvénients, il est connu, des documents FR-A-2,229,970 ou USP 3,680,239, d'utiliser pour le contrôle magnétique selon le principe du champ de fuite pre-mentionné d'autres capteurs à mesure directe de champ magnétique que les sondes à effet Hall, à savoir des capteurs magnéto-résistifs.

Toutefois, les performances de cette méthode de contrôle restent dépendantes du champ magnétique émis par le produit à l'extérieur, au voisinage immédiat de sa surface. Ceci n'est pas sans poser des problèmes, en particulier des problèmes de protection des capteurs magnéto-résistifs lorsque les produits sont à température élevée et/ou animés d'un mouvement de défilement, comme c'est le cas des produits sidérurgiques au cours de leur processus de fabrication.

L'invention a pour but d'éviter ces problèmes tout en permettant une détection fiable de défauts, même avec faible magnétisation du produit, une utilisation combinée facilitée de détecteurs à bobines à Courants de Foucault et de détecteurs à mesure directe du champ, ainsi que l'utilisation d'un appareillage électronique commun pour ces différents capteurs, et obtenir le maximum d'informations caractéristiques des défauts détectés en une seule opération de contrôle.

Avec ces objectifs en vue, l'invention a pour objet un dispositif de contrôle de produits métalliques comportant des moyens de magnétisation pour créer un champ magnétique destiné à se propager dans le produit à contrôler et des moyens de détection de défauts sur ou dans ledit produit, sensibles aux variations de l'intensité d'un champ magnétique, caractérisé en ce que les moyens de détection sont constitués par au moins une sonde magnéto-résistive et en ce que les moyens de magnétisation comportent au moins une face polaire pouvant être disposée à distance et parallèlement à la surface du produit à contrôler, et génèrent par ladite face polaire un champ magnétique dont les lignes de force incidentes pénétrant dans le produit à contrôler selon une direction sensiblement perpendiculaire à la surface dudit produit délimitent un entrefer en dehors, mais au voisinage immédiat duquel se situe ladite sonde magnéto-résistive.

Comme on l'aura sans doute compris, l'invention consiste, dans ses caractéristiques essentielles, à s'intéresser, non pas au champ magnétique émis par le produit au voisinage de sa surface en présence d'un défaut (champ de fuite), mais au champ magnétique incident créé par le générateur de champ en direction du produit à contrôler et dont les lignes de force, pénétrant dans ce produit perpendiculairement à sa surface, sont défléchies en présence d'un défaut à l'aplomb du générateur. Aussi, en disposant une sonde magnétique hors de l'entrefer, mais à proximité immédiate de celui-ci, de manière à n'être baignée par le champ magnétique incident que lorsque les lignes de force sont défléchies en raison de la présence d'un défaut sous le générateur, on parvient ainsi à détecter à coup sûr une telle présence.

Un avantage déterminant que procure l'invention par rapport à la technique du champ de fuite est qu'il n'est plus nécessaire de saturer ou de quasi-saturer magnétiquement le produit à inspecter. Dès lors, il n'est plus nécessaire d'utiliser des générateurs puissants, donc volumineux et coûteux. Il est donc notamment aisé de construire un appareil de contrôle à générateur embarqué, ce qui permet d'éviter d'avoir recours à une pré-aimantation d'un produit devant être ensuite inspecté sur champ rémanent. En outre, l'appareil d'inspection peut être placé relativement loin de la surface du produit à inspecter, (1 cm voire au-delà) sans que cela nuise au niveau d'intensité du champ magnétique qu'il est nécessaire d'atteindre à l'impact sur le produit (et qui peut être de l'ordre de 50 à 300 Gauss seulement). Cette possibilité qu'offre l'invention de placer l'appareil à distance est particulièrement avantageuse pour le coût de fabrication, puisqu'il n'est plus nécessaire de prévoir des moyens très sophistiqués pour le protéger thermiquement à l'égard du rayonnement si le produit est chaud, ou le protéger contre les chocs dus aux fluctuations de trajectoire inévitables si le produit est en défilement sous l'appareil, comme c'est généralement le cas.

Cette possibilité offerte par l'invention de travailler à des intensités de champs modérée s'accompagne de l'utilisation de magnéto-résistances, ce qui améliore la fiabilité de la détection des défauts en raison de la sensibilité accrue de ce type de capteur par rapport à d'autres capteurs, tels que ceux utilisant une sonde à effet Hall.

De plus, dans le cas où l'on souhaite combiner ce type de détection avec une détection par Courants de Foucault, l'appareillage de traitement des signaux fournis par les différents capteurs peut être commun à ceux-ci puisque le type de signal fourni est le même : mesure d'une impédance pour les bobines à Courants de Foucault et mesure de résistance pour les magnéto-résistances.

Préférentiellement, les moyens de détection comportent un capteur formé de quatre magnéto-résistances montées en pont de Wheatstone. Ainsi, par le seul fait de placer chacune des magnéto-résistances dans une disposition (qui sera expliquée de manière plus détaillée dans la suite de ce mémoire), telle que l'orientation des magnéto-résistances soit inversée d'une branche du pont à la branche voisine, la sensibilité du capteur se trouve être encore accrue, tout en s'affranchissant d'effets parasites tels que des variations de température ou autres signaux parasites.

Préférentiellement encore, les moyens de détection comportent deux capteurs montés en différentiel et disposés à distance l'un au-dessus de l'autre, selon une direction perpendiculaire à la surface du produit à contrôler. Cette disposition permet d'une part de bénéficier des avantages connus d'une utilisation en mode différentiel par rapport à une utilisation en mode absolu, et d'autre part de s'affranchir de l'effet, appelé classiquement "lift off", c'est-à-dire de l'effet de variations de l'entrefer entre le capteur et la surface du produit à contrôler, variations qui peuvent être dues par exemple soit à des vibrations du capteur ou du produit, soit à des irrégularités de surface du produit.

La magnétisation peut être effectuée soit par une bobine alimentée en courant électrique, soit par un aimant permanent, disposés de manière qu'au moins une partie des lignes de champ généré par ces moyens, passe dans le produit.

Dans les deux cas, les capteurs de détection sont situés à l'air libre à côté des moyens de magnétisation, en dehors, mais à proximité immédiate de l'entrefer défini par la portion de l'espace située entre la face polaire des moyens de magnétisation et la partie de la surface du produit à inspecter qui lui fait face.

Selon une autre disposition particulière de l'invention, le dispositif comporte une bobine d'excitation, alimentée en courant variable, pour générer un champ magnétique variable dans le produit à contrôler, et une ou des bobine(s) de détection de Courants de Foucault, pour détecter et mesurer des perturbations, provoquées par la présence de défauts dans le produit, des Courants de Foucault générés dans le produit par le champ magnétique variable.

Cette disposition, qui associe les détecteurs à magnéto-résistance avec des détecteurs à bobines à Courants de Foucault, permet d'obtenir simultanément des signaux issus de ces différents types de détecteurs, et ainsi d'obtenir plus d'informations sur les défauts détectés tout en n'effectuant qu'une seule opération de contrôle. On obtient ainsi d'une part des signaux correspondant aux variations de résistance des magnéto-résistances, directement liés à l'intensité du champ existant au lieu où se trouve le capteur à magnéto-résistance, et d'autre part des signaux correspondants aux variations d'impédance de la ou des bobines de détection des Courants de Foucault, qui sont eux liés aux perturbations des Courants de Foucault générés dans le produit par le champ excitateur qui doit alors être nécessairement variable, périodique, alternatif ou pulsé.

La position relative de la bobine d'excitation et des bobines de détection des Courants de Foucault sera choisie parmi les diverses possibilités bien connues de l'homme du métier pour les capteurs à Courants de Foucault, et en tenant compte de la position des moyens de détection à magnétorésistances par rapport aux dites bobines d'excitation et de détection. Selon une disposition particulière, la ou les bobines de détection sont disposées de façon que leurs axes soient orthogonaux à la surface du produit à contrôler et les moyens de détection sont placés à l'intérieur de la bobine de détection, à proximité de la dite surface.

D'autres caractéristiques et avantages de l'invention apparaîtront dans la description qui va être faite d'un procédé de contrôle conforme à l'invention et au dispositif pour leur mise en oeuvre.

On se reportera aux dessins annexés dans lesquels :
- les figures 1a et 1b sont des vues schématiques montrant le principe de fonctionnement de l'invention,
- la figure 2 est une vue en coupe des moyens de détection selon l'invention, dans une première variante de réalisation,
- la figure 3 est une vue similaire des moyens de détection dans une seconde variante,
- la figure 4 est une vue d'un ensemble de magnéto-résistance montée en pont de Weatstone, formant un capteur utilisé dans les moyens de détection,
- les figures 5a et 5b sont des vues schématiques d'un autre mode d'utilisation d'un dispositif conforme à l'invention, que celui montré aux figures 1a et 1b,

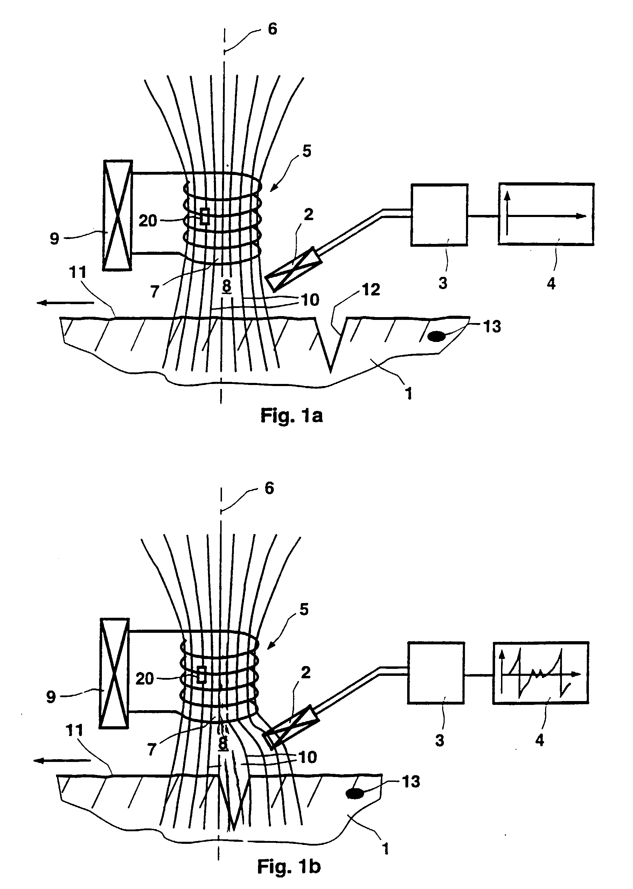

Sur les dessins de la figure 1, on a représenté, partiellement en 1, un produit métallique à inspecter en défilement continu dans le sens de la flèche, par exemple une billette d'acier, à l'état brut de coulée, à la sortie d'une machine de coulée continue. La surface 11 de ce produit est donc passablement irrégulière et hétérogène, ce qui fait toute la difficulté habituelle d'un contrôle de défauts non destructif fiable de tels produits.

Un générateur de champ magnétique, ici un solenoide 5 d'axe 6 orienté perpendiculairement à la surface 11 du produit à inspecter 1, est placé à une distance d'un centimètre environ de cette surface. La "face polaire" 7 de l'inducteur qui surplombe ainsi la surface 11, définit avec celle-ci un entrefer 8. L'entrefer 8 est la région de l'espace où va s'établir le champ magnétique incident créé par le solenoide 5 (lorsque celui-ci est alimenté en courant électrique par la source 9) selon des lignes de force 10 dirigées perpendiculairement, ou sensiblement perpendiculairement, à la surface 11.

En dehors de cet entrefer, mais dans son voisinage immédiat, est disposé un détecteur 2 de défauts à sonde magnéto-résistive, relié à des moyens 3 de traitements des signaux fournis par les moyens de détection 2, dont la sortie communique avec des moyens de visualisation 4.

A titre d'exemple, on a représenté sur le produit 1 un défaut 12, ici une crique ou une fissure débouchant à la surface 11. Le produit 1 défilant dans le sens de la flèche, de droite à gauche sur les dessins, la crique 12 se présente, à un instant donné, en amont de celui-ci en vue de l'appareil de détection, mais suffisamment loin pour ne pas être déjà détectable (fig. la). L'écran de visualisation 4 affiche un signal plat. Un instant plus tard (fig. 1b), le défaut vient de pénétrer dans l'entrefer 8. Ce défaut étant constitué d'un vide ponctuel de matière métallique, la réluctance magnétique globale du produit 1 dans l'entrefer 8 va se modifier brutalement et, avec elle, l'organisation des lignes de forces 10 du champ magnétique incident. Celui-ci recherchant en effet un circuit magnétique de perméabilité maximale, va tendre à contourner le défaut 12 pour rejoindre la matière métallique environnante, donc à "enfler" depuis sa sortie de la face polaire 7 en direction du capteur 2. Ce "gonflement" du champ hors de l'entrefer, où il était confiné en l'absence de défaut, se traduit par une déflection des lignes de forces 10 qui, comme le montre la figure 1b, atteignent le détecteur 2. Celui-ci réagissant aussitôt à la variation de l'intensité du champ magnétique qui le traverse, permet au visualisateur 4 d'afficher un signal représentatif du défaut 12 ainsi détecté.

Comme on le voit donc, l'arrivée d'un défaut dans la région de détection modifie le volume apparent de l'entrefer 8, qui passe ainsi de sa taille normale (fig. la) à une taille supérieure en présence d'un défaut (fig. lb), et le détecteur 2 est précisément placé dans la zone de varation de ce volume.

Dans le cas d'un défaut interne, tel qu'une inclusion non métallique 13, les lignes de champ 10 sont défléchies de la même manière lors du passage du défaut.

Comme on l'a déjà dit, le détecteur 2 peut, avantageusement inclure à côté des sondes magnéto-résistives, des sondes à Courant de Foucault pour améliorer encore, au besoin, les performances de l'appareil de détection.

Il est cependant à noter que, dans le cas de demi-produits sidérurgiques bruts de coulée continue, ou même, obtenus après une première transformation (laminage à chaud par exemple), la détection de défauts par un détecteur 2, équipé uniquement de magnéto-résistance, a toujours été amplement satisfaisant dans tous les essais effectués.

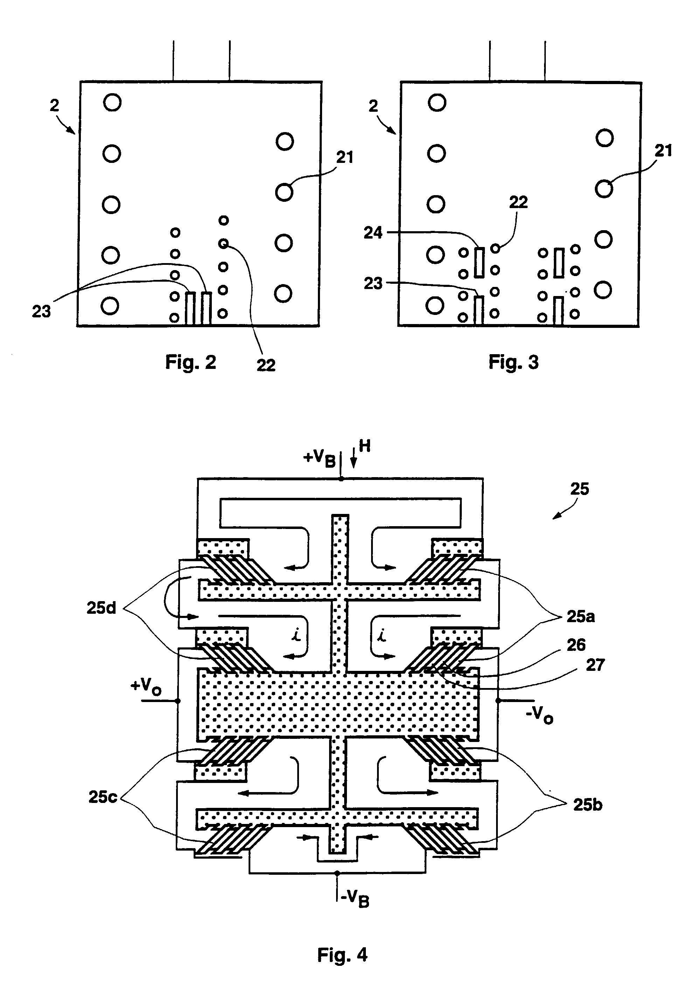

Ceci dit, sur la figure 2, on a représenté une première forme de réalisation complète des moyens de détection 2, c'est-à-dire incluant magnéto-résistances et sondes à Courant de Foucault. Ces moyens de détection 2 comprennent une bobine d'excitation 21, d'axe perpendiculaire à la surface, alimentée en courant électrique variable, alternatif, ou redressé sur une ou deux alternances, pour générer dans le produit des Courants de Foucault. Les moyens de détection comprennent aussi deux bobines 22 de détection de Courants de Foucault, montées en opposition, de manière connue en soi dans le domaine de la détection de défauts par Courants de Foucault, et deux magnéto-résistances 23, disposées parallèlement l'une à l'autre et raccordées selon un montage en différentiel. Les bobines détectrices de Courants de Foucault sont coaxiales à la bobine d'excitation 21 et placées à l'intérieur de celle-ci ; les magnéto-résistances 23 s'étendent parallèlement à la direction axiale des bobines.

L'utilisation de ces moyens de détection s'effectue de la manière suivante : lorsque la bobine d'excitation 21 est alimentée, elle génère dans le produit à contrôler des Courants de Foucault, qui génèrent eux-mêmes un champ magnétique de sens opposé au champ créé par la bobine 21. En présence d'un défaut, la perturbation des Courants de Foucault provoquée par ce défaut, sera détectée par la variation d'impédance des bobines détectrices 22. Simultanément, les variations du champ magnétique au droit du défaut seront détectées par une variation de la résistance des magnéto-résistances 23.

Les bobines détectrices 22 d'une part, et les magnéto-résistances 23 d'autre part, sont reliées aux moyens de traitement 3 qui comportent un circuit de traitement multivoies. Il est ainsi possible de visualiser en même temps les mesures faites par les magnéto-résistances et celles faites par les bobines détectrices à Courants de Foucault. Les caractéristiques des signaux fournis par chacun de ces éléments détecteurs donnent des informations complémentaires sur les défauts, permettant de mieux les détecter et de mieux les caractériser.

A la figure 3, on a représenté une seconde variante complète de réalisation des moyens de détection 2. Dans cette variante, les bobines 22 à Courants de Foucault sont montées l'une à côté de l'autre et raccordées en montage différentiel. Des magnéto-résistances 23, 24 sont disposées à l'intérieur de chaque bobine 22, l'une au-dessus de l'autre dans la direction axiale des bobines.

Cette disposition des magnéto-résistances permet de corriger les effets des éventuelles variations d'entrefer entre le produit et les moyens de détection. En effet, la magnéto-résistance 23 la plus proche de la surface du produit est très sensible aux défauts mais aussi aux variations d'entrefer, alors que celle 24, plus éloignée du produit, est essentiellement sensible aux variations d'entrefer. Il devient ainsi possible, par traitement des signaux fournis par chacune des magnéto-résistances, de reconnaître les variations des signaux dues aux variations d'entrefer, et donc d'extraire du signal fourni par la magnéto-résistance 23, les seules variations dues aux défauts. Par ailleurs, la magnéto-résistance 24 qui est placée plus en profondeur dans la bobine d'excitation, permet de mesurer la valeur du champ excitateur, ceci du fait qu'elle n'est pratiquement pas influencée par les variations de champ au voisinage du produit, provoquée par les défauts.

Les deux variantes de réalisation des moyens de détections représentés aux figures 2 et 3, combinant des capteurs à bobines à Courants de Foucault avec des capteurs magnéto-résistifs, permettent de faire trois types de mesures différentes :
- un contrôle selon la méthode du flux de dispersion, sur des matériaux ferromagnétiques, en utilisant des capteurs magnéto-résistifs,
- un contrôle par Courants de Foucault, en mesurant les distorsions de champ magnétique engendrées par la présence de défauts en utilisant les capteurs magnéto-résistifs, et
- un contrôle par Courants de Foucault de type classique, par mesure de l'impédance des bobines détectrices.

Ces différents types de mesure permettent de donner, pour chaque défaut, des images différentes qui peuvent elles-mêmes être traitées pour donner des informations complémentaires sur les défauts détectés.

A la figure 4, on a représenté un capteur 25 à magnéto-résistance formé de quatre magnéto-résistances montées en pont de Wheatstone.

Dans ce capteur, chaque branche du pont est formée par une magnéto-résistance 25a, 25b, 25c, 25d. Chacune de ces magnéto-résistances est de type dit "Barber pôle", connu de l'homme du métier, c'est-à-dire comportant des barres 26 d'aluminium ou d'or disposées à 45° en travers de barres 27 en permalloy. Cette disposition permet de rendre linéaire la variation de résistance de la magnéto-résistance en fonction du champ magnétique auquel elle est soumise.

Dans deux magnéto-résistances adjacentes, par exemple 25a et 25b, l'inclinaison à 45° est inversée. Il en résulte que les variations d'un champ H modulent les résistances des magnéto-résistances d'une même quantité mais en sens contraire, ce qui accentue l'effet de pont de mesure et accroît la sensibilité de détection du capteur, tout en permettant de s'affranchir d'effets parasites, tels que des variations de températures.

Un tel capteur est avantageusement utilisé à la place de chacune des magnéto-résistances 23 et 24 précédemment mentionnées, plusieurs de ces capteurs pouvant être associés en montage différentiel, ou en disposition superposée, comme indiqué précédemment.

On notera également que l'utilisation de magnéto-résistances présente un avantage complémentaire : la nature ferromagnétique des magnéto-résistances tend à attirer les lignes de champ incident, de sorte que l'obligation de placer le détecteur 2 à la limite de l'entrefer 8 s'en trouve allégée, ce qui facilite le montage des éléments constitutifs de l'appareil de détection.

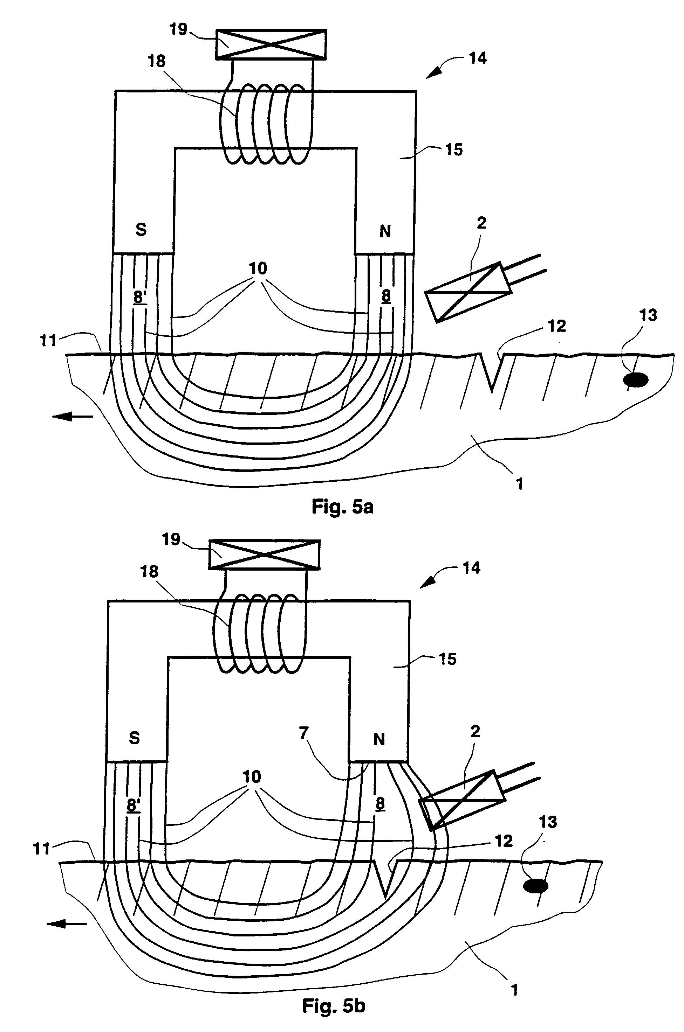

Sur les dessins de la figure 5, analogues à ceux de la figure 1, on a représenté une variante de réalisation de l'invention basée sur un générateur de champ constitué, non plus par un solenoide (fig. 1), mais par un électro-aimant 14 à culasse magnétique 15 en forme de "U", dont l'âme est entourée dans sa partie centrale par une bobine 18 alimentée en énergie électrique par une source 19. Bien entendu, un aimant permanent peut également faire l'affaire, mais un électroaimant permet de régler l'intensité du champ au niveau souhaité et atteindre des niveaux d'intensité hors de portée des aimants permanents.

L'utilisation d'un aimant en "U", dont les faces polaires N, S sont disposées en regard de la surface 11 du produit défilant 1 à inspecter, présente l'avantage d'offrir aux lignes de force du champ 10 un circuit magnétique quasiment fermé qui les canalise dans le produit 1 et dont les seules discontinuités sont les entrefers 8 et 8' nécessaires entre la culasse 15 et le produit 1.

Il s'en suit un confinement plus poussé des lignes de champs 10 dans les entrefers et donc une sensibilité encore meilleure du capteur à magnéto-résistance 2 placé au voisinage.

Il est connu, en effet, que la sensibilité d'une magnéto-résistance diminue quand augmente la composante du champ magnétique (disons Hx) perpendiculaire à la direction choisie pour la mesure du champ (disons Hy).

Si Hx atteint une certaine proportion de Hy, il se produit un phénonème de battement du capteur, plus connu sous le vocable de phénomène de "flip". La tension mesurée aux bornes du capteur passe brusquement à des valeurs élevées, mais de signes opposés, ce qui rend le capteur inutilisable.

L'utilisation d'un aimant en "U", tel que 14, procure au niveau du capteur 2, une composante parasite Hx du champ magnétique très faible.

Il a d'ailleurs été trouvé, sans que les raisons soient déjà parfaitement élucidées, que la sensibilité du capteur 2 était encore améliorée grâce à une orientation inclinée du capteur sur la verticale, comme le montre les figures.

La bobine 18 peut être alimentée, non seulement en courant continu, mais également en courant alternatif ou pulsé. On peut alors mesurer, à l'aide du capteur 2, le champ magnétique de réaction généré par les Courants de Foucault induits dans le produit 1 et déphasé de Π/2 par rapport au champ excitateur, et donc les variations de ce champ de réaction lorsque les Courants de Foucault sont perturbés par la présence d'un défaut tel que 12. En couplant à ces moyens, des bobines de détection à Courants de Foucault, on peut simultanément mesurer les variations d'impédance de ces bobines provoquées par le présence de défauts.

On notera que dans les dispositions représentées sur les figures 1 ou 5, on peut associer aux magnéto-résistances, une ou plusieurs bobines de détection à Courants de Foucault, lorsque la bobine génératrice du champ magnétique incident est alimentée en courant alternatif ou pulsé. Comme le montre la figure 1, des bobines de détection à Courants de Foucault 20 peuvent notamment être placées au sein de la bobine d'excitation 5. Il est à noter que dans le cas où deux capteurs 2 sont utilisés, ils peuvent avantageusement être placés l'un au-dessus de l'autre pour permettre de compenser les variations de mesure dues aux variations d'entrefer, comme cela a été décrit précédemment, en relation avec la figure 3.

De même, les capteurs peuvent être disposés l'un à côté de l'autre, dans la direction de leur déplacement relatif par rapport au produit en défilement, pour effectuer une détection en mode différentiel.

Bien entendu, ces deux dispositions peuvent être combinées, à la manière de ce qui a été décrit en relation avec la figure 3.

On notera également qu'on a bien entendu avantage à utiliser des bobines 20 blindées par une enveloppe en matériau conducteur de l'électricité pour éviter d'être influencées par les variations du champ magnétique produit par la bobine d'exitation 5.

Outre les avantages indiqués précédemment, résultants de la possibilité de traiter les signaux fournis par les capteurs à magnéto-résistances et les éventuelles bobines de détection de Courants de Foucault par un même appareillage électronique, le traitement lui-même des signaux, conformément à l'invention, permet d'améliorer encore la détection et la caractérisation des défauts.

A cette fin, le signal fourni par les capteurs, représentatif des variations locales de champ est traité par un calcul de sa dérivée en fonction du temps. Comme le signal d'un défaut est caractérisé par des fronts raides de montée et de descente, ce traitement permet d'accroître l'importance relative des signaux à front raide par rapport aux signaux parasites dus, entre autres, à des variations de perméabilité magnétique et dont les variations sont moins brutales.

Ce traitement peut être combiné à un filtrage, soit par des filtres anti-bruit éliminant les fréquences où apparaissent les perturbations de champ magnétique, soit par une fonction de décalage de zéro obtenue en injectant dans le signal des contre-tensions de valeur ajustable manuellement ou automatiquement pour compenser les variations globales de perméabilité magnétique, et ainsi faire ressortir, dans le signal visualisé, les petites variations dues à des défauts de petite dimension.

Préférentiellement, les signaux représentatifs de la dérivée sont également traités dans une fenêtre d'analyse de largeur réglable, la présence d'un défaut étant détectée par la présence, dans cette fenêtre, d'un signal présentant une double polarité. Ce traitement utilise la propriété selon laquelle, lors de la mesure de la composante normale du champ magnétique, un signal de défaut se caractérise par une double polarité, c'est-à-dire un pic positif apparaissant lorsque le capteur arrive au droit du début de défaut, et un pic négatif lorsque le capteur passe au droit de la fin du défaut ou vice versa. Comme une fissure par exemple se caractérise par une faible largeur par rapport à la longueur, ces deux pics sont très rapprochés lorsque le déplacement est effectué perpendiculairement à la direction longitudinale de la fissure, et l'analyse des signaux dans une fenêtre de largeur prédéfinie, permet de détecter aisément si les signaux correspondants à ces deux pics apparaissent simultanément dans la fenêtre d'analyse. Si tel est le cas, cela signifie que l'on est en présence d'une fissure, alors que des signaux plus larges présentant souvent une seule polarité, correspondant généralement à des variations de perméabilités, ne seront pas retenus suite à ce traitement.

Pour détecter des défauts sous-cutanés, situés plus en profondeur, on effectuera avantageusement un traitement de même type que celui indiqué ci-dessus, mais en utilisant une fenêtre d'analyse plus large.

En effet, les pics des signaux correspondants à des défauts sous-cutanés sont plus espacés que dans le cas de défauts de surface, ceci résultant du fait que comme on peut le voir sur la figure 1, la largeur de la déviation des lignes de champ, détectable à la surface du produit, est plus grande dans le cas de défauts sous-cutanés que dans le cas de défauts de surface. De plus, ces pics sont moins accentués que ceux obtenus dans le cas d'un défaut de surface, mais cependant suffisamment distincts, surtout après le traitement par calcul de la dérivée indiqué précédemment, des signaux résultant de simples variations de perméabilité magnétique.

Ainsi, une fenêtre de traitement étroite permettra de détecter des défauts de surface, une fenêtre plus large permettra de détecter les défauts sous-cutanés, et les variations de perméabilité, fournissant des signaux encore plus larges, ne seront pas pris en compte.

D'autres traitements des signaux peuvent aussi être effectués, notamment par analyse de phase des signaux, permettant, dans le cas d'un contrôle simultané par mesure de la résistance des capteurs magnéto-résistifs et de l'impédance de bobines à courant de Foucault, de mieux caractériser les défauts ou de mieux séparer les effets des variations d'entrefer des signaux de défaut. En particulier aussi, dans ce cas, l'utilisation de différentes fréquences pour le champ excitateur, et l'analyse des signaux en fonction de ces fréquences permet d'évaluer la profondeur des défauts.

L'invention n'est pas limitée aux dispositions décrites ci-dessus à titre d'exemple. En particulier, dans le cas d'une utilisation combinée de magnétorésistances et de bobines de détection à Courants de Foucault, la disposition de celles-ci pourra être adaptée selon les différentes configurations géométriques et les différents montages électriques de telles bobines, connus de l'homme du métier pour les capteurs à Courants de Foucault. Ceci couvre en particulier la possibilité, déjà connue, d'utiliser, pour la détection par Courants de Foucault, une même bobine pour l'excitation et la détection.

De même, il est possible d'utiliser deux sondes magnétorésistives telles que 2, disposées selon deux directions perpendiculaires, de façon à pouvoir détecter les variations de champ magnétique selon ces deux directions simultanément. L'avantage dans ce cas est que l'opération de contrôle s'effectue de façon complètement indépendante de la vitesse de défilement relatif du produit à inspecter sous le détecteur. En effet, on peut obtenir alors, en représentant les variations mesurées par une sonde en fonction des variations mesurées par l'autre sonde, une "image" de détection dans le plan d'impédance comparable à celles obtenues en détection par Courants de Foucault.

De même encore, il est possible également de travailler en décalage de temps avec une sonde telle que 2 (ou plusieurs séparément), mais en représentant dans le plan d'impédance, le signal obtenu par la sonde à l'instant t + Δt (ou t - Δt) en fonction du signal obtenu à un instant t précédent (ou postérieur). Cette façon d'opérer permet également de pouvoir bien séparer l'"image" de détection propre à un défaut de celle correspondante au "lift off" (fluctuation de l'entrefer 8 en raison du mouvement relatif entre la bobine exitatrice 5 et le produit défilant 1).

Grâce à la grande sensibilité de la détection réalisable selon l'invention et aux différentes variantes et combinaisons des différents modes de détection, l'invention s'applique à la détection d'une grande variété de défauts sur une large gamme de produits métalliques ; notamment, outre la détection, déjà signalée, de défauts sur des produits ou demi-produits sidérurgiques issus de la coulée continue, elle s'applique avantageusement au contrôle d'assemblages soudés, en particulier pour détecter et déterminer la position en profondeur de fissures au niveau du cordon de soudure entre, par exemple, un acier au carbone et un acier inox.

## Revendications

1. Dispositif de contrôle de produits métalliques comportant des moyens de magnétisation pour créer un champ magnétique destiné à se propager dans le produit à contrôler et des moyens de détection de défauts dudit produit, sensibles aux variations de l'intensité d'un champ magnétique, caractérisé en ce que les moyens de détection (2) sont constitués par au moins une sonde magnéto-résistive, et en ce que les moyens de magnétisation (5) comportent au moins une face polaire (7) pouvant être disposée à distance et parallèlement à la surface (11) du produit à contrôler (1), et génèrent par ladite face polaire (7) un champ magnétique dont les lignes de force incidentes (10), pénétrant dans le produit à contrôler selon une direction sensiblement perpendiculaire à la surface (11) dudit produit, délimitent un entrefer (8) en dehors, mais au voisinage immédiat duquel se situent lesdits moyens de détection (2).

2. Dispositif selon la revendication 1, caractérisé en ce que les moyens de détection (2) comportent un capteur formé de quatre magnéto-résistances (25a, 25b, 25c, 25d) montées en pont de Wheatstone.

3. Dispositif selon la revendication 1, caractérisé en ce que les moyens de magnétisation comportent une bobine d'excitation (5, 18) alimentée en courant électrique.

4. Dispositif selon la revendication 1, caractérisé en ce que les moyens de magnétisation comportent une bobine d'excitation (5, 18) alimentée en courant électrique variable pour produire un champ magnétique variable dans le produit à contrôler, et pourvue, d'au moins une bobine (20) de détection de défauts, sensible aux Courants de Foucault qui se développent dans le produit à contrôler sous l'effet du champ magnétique variable.

5. Dispositif selon la revendication 1 caractérisé en ce que les moyens de détection (2) sont constitués par au moins deux magnétorésistances disposées selon deux directions perpendiculaires.

6. Procédé de contrôle magnétique de produits métalliques (1) selon lequel on magnétise le produit par un champ magnétique et on détecte et mesure les variations locales du champ au voisinage du produit, ces variations étant représentatives de défauts (12, 13) du produit, caractérisé en ce qu'on magnétise le produit (1) par un champ magnétique incident dont les lignes de force (10), qui pénètrent dans le produit à contrôler selon une direction sensiblement perpendiculaire à sa surface (11), définissent un entrefer (8) dont le volume varie entre une limite inférieure obtenue en l'absence de défauts du produit et une limite supérieure atteinte lors de la présence d'un défaut du produit, et en ce qu'on effectue lesdites détections et mesures par mesure de la résistance d'un capteur magnéto-résistif (2) et en ce que l'on place le capteur magnéto-résistif (2) dans la zone de variation du volume de l'entrefer (8).

7. Procédé selon la revendication 6, caractérisé en ce qu'on l'applique à des produits sidérurgiques issus de la coulée continue.

8. Procédé selon la revendication 7, caractérisé en ce que pour détecter les défauts, on calcule la dérivée en fonction du temps du signal représentatif des variations locales de champ magnétique à l'endroit du capteur magnéto-résistif (2).

9. Procédé selon la revendication 8, caractérisé en ce qu'on traite les signaux représentatifs de la dérivée par une fenêtre d'analyse de largeur réglable, la présence d'un défaut étant détectée par l'apparition dans cette fenêtre d'un signal présentant une double polarité.

10. Procédé selon la revendication 6 ou 7, caractérisé en ce qu'on effectue la détection de défauts en représentant, dans le plan d'impédance, le signal obtenu à l'instant t ∓ Δt par le capteur magnétorésistif (2) en fonction du signal obtenu à l'instant t, par ledit capteur.

## Claims

1. Device for testing metal products, including magnetizing means for creating a magnetic field intended to propagate through the product to be tested and means for detecting defects in the said product, which are sensitive to variations in the intensity of a magnetic field, characterized in that the detection means (2) consist of at least one magnetoresistive probe, and in that the magnetizing means (5) have at least one pole face (7), which can be arranged at a distance from and parallel to the surface (11) of the product (1) to be tested, and generate via the said pole face (7) a magnetic field whose incident force lines (10), penetrating the product to be tested in a direction substantially perpendicular to the surface (11) of the said product, delimit an air gap (8) outside which, but in the immediate vicinity of which, the said detection means (2) are located.

2. Device according to Claim 1, characterized in that the detection means (2) include a sensor formed by four magnetoresistors (25a, 25b, 25c, 25d) mounted in a Wheatstone bridge configuration.

3. Device according to Claim 1, characterized in that the magnetizing means include an excitation coil (5, 18) supplied with electric current.

4. Device according to Claim 1, characterized in that the magnetizing means include an excitation coil (5, 18) supplied with variable electric current for producing a variable magnetic field in the product to be tested, and provided with at least one defect-detection coil (20) sensitive to the eddy currents which are developed in the product to be tested under the effect of the variable magnetic field.

5. Device according to Claim 1, characterized in that the detection means (2) consist of at least two magnetoresistors arranged along two perpendicular directions.

6. Method for the magnetic testing of metal products (1), according to which the product is magnetized with a magnetic field and the local variations in the field in the vicinity of the product are detected and measured, these variations being representative of defects (12, 13) in the product, characterized in that the product (1) is magnetized by an incident magnetic field whose force lines (10), which penetrate the product to be tested along a direction substantially perpendicular to its surface (11), delimit an air gap (8) whose volume varies between a lower limit, obtained in the absence of defects in the product, and an upper limit, reached during the presence of a defect in the product, and in that the said detections and measurements are carried out by measuring the resistance of a magnetoresistive sensor (2), and in that the magnetoresistive sensor (2) is placed in the region where the volume of the air gap (8) varies.

7. Method according to Claim 6, characterized in that it is applied to iron and steel products produced by continuous casting.

8. Method according to Claim 7, characterized in that, in order to detect the defects, the derivative with respect to time of the signal representing the local magnetic field variations at the magnetoresistive sensor (2) is calculated.

9. Method according to Claim 8, characterized in that the signals representing the derivative are processed using an analysis window of adjustable width, the presence of a defect being detected by the appearance in this window of a signal having double polarity.

10. Method according to Claim 6 or 7, characterized in that defects are detected by representing, in the impedance plane, the signal obtained at time t ± Δt by the magnetoresistive sensor (2) as a function of the signal obtained at time t by the said sensor.

## Patentansprüche

1. Vorrichtung zur Kontrolle metallischer Produkte mit Magnetisierungseinrichtungen zum Erzeugen eines magnetische Feldes, das sich in dem zu kontrollierenden Produkt ausbreitet, und mit Detektionseinrichtungen für Fehler dieses Produktes, die auf Änderungen der Intensität eines Magnetfeldes ansprechen, dadurch gekennzeichnet, daß die Detektionseinrichtungen (2) mindestens eine magneto-resistive Sonde aufweisen, und daß die Magnetisierungseinrichtungen (5) zumindest eine Polfläche (7) aufweisen, die mit Abstand und parallel zu der Oberfläche (11) des zu kontrollierenden Produktes (1) angeordnet werden kann, und durch diese Polfläche (7) ein Magnetfeld erzeugen, deren einfallenden Kraftlinien (12), die in das zu kontrollierende Produkt im wesentlichen senkrecht zu der Oberfläche (11) dieses Produktes eindringen, einen Luftspalt (8) begrenzen, der außerhalb, jedoch in unmittelbarer Nachbarschaft zu den Detektionseinrichtungen (2) gelegen ist.

2. Vorrichtung nach Anspruch 1, dadurch gekennzeichnet, daß die Detektionseinrichtungen (2) einen Aufnehmer aufweisen, der aus vier Magnetwiderständen (25a, 25b, 25c, 25d) gebildet ist, die in einer Wheatstone'schen Brückenschaltung angeordnet sind.

3. Vorrichtung nach Anspruch 1, dadurch gekennzeichnet, daß die Magnetisierungseinrichtungen eine Erregerspule (5, 18) aufweisen, die mit elektrischem Strom versorgt wird.

4. Vorrichtung nach Anspruch 1, dadurch gekennzeichnet, daß die Magnetisierungseinrichtungen eine Erregerspule (5, 18) aufweisen, die mit einem variablen elektrischen Strom versorgt werden, um ein variables magnetisches Feld in dem zu kontrollierenden Produkt zu erzeugen, und das mindestens eine Fehlerdetektionsspule (20) vorgesehen ist, die auf Wirbelströme anspricht, die sich in dem zu kontrollierenden Produkt unter der Wirkung des variablen magnetischen Feldes entwickeln.

5. Vorrichtung nach Anspruch 1, dadurch gekennzeichnet, daß die Detektionseinrichtungen (2) aus mindestens zwei Magnetwiderständen gebildet sind, die längs zweier senkrechter Richtungen angeordnet sind.

6. Verfahren zur magnetischen Kontrolle metallischer Produkte (1), bei dem das Produkt durch ein Magnetfeld magnetisiert und die lokalen Änderungen des Feldes in der Nachbarschaft des Produktes detektiert und gemessen werden, wobei diese Änderungen repräsentativ für Fehler (12, 13) des Produktes sind, dadurch gekennzeichnet, daß das Produkt (1) durch ein eintretendes Magnetfeld magnetisiert wird, dessen Kraftlinien (10), die in das zu kontrollierende Produkt in einer im wesentlichen zu seiner Oberfläche (11) senkrechten Richtung eindringen, einen Luftspalt definieren, dessen Volumen zwischen einem unteren, in Abwesenheit von Fehlern des Produktes erhaltenen Grenzwert und einem oberen, bei Vorliegen eines Fehlers des Produktes erhaltenen Grenzwert variiert, und daß die Detektierungen und Messungen durch Messen des Widerstandes eines magneto-resistiven Aufnehmers (2) bewirkt wird, und daß der magneto-resistive Aufnehmer (2) in der Zone der Änderung des Volumens des Luftspaltes (8) plaziert wird.

7. Verfahren nach Anspruch 6, dadurch gekennzeichnet, daß es bei Eisenhüttenprodukten angewendet wird, die im Stranggießverfahren hergestellt werden.

8. Verfahren nach Anspruch 7, dadurch gekennzeichnet, daß zum Detektieren der Fehler die zeitliche Ableitung des Signales berechnet wird, welches die lokalen Änderungen des magnetischen Feldes am Ort des magneto-resistiven Aufnehmers (2) darstellt.

9. Verfahren nach Anspruch 8, dadurch gekennzeichnet, daß die die Ableitung darstellenden Signale mit Hilfe eines Analysefensters mit regelbarer Größe behandelt werden, wobei das Vorhandensein eines Fehlers durch das Auftreten eines Signales mit doppelter Polarität in diesem Fenster detektiert wird.

10. Verfahren nach Anspruch 6 oder 7, dadurch gekennzeichnet, daß die Detektion von Fehlern dadurch bewirkt wird, daß in der Impedanzebene das zu einem Zeitpunkt t ∓ Δt durch den magneto-resistiven Aufnehmer (2) erhaltene Signal als Funktion des zum Zeitpunkt t durch diesen Aufnehmer erhaltenen Signales dargestellt wird.
